# EUROPEAN PATENT SPECIFICATION

(11) **EP 3 951 397 B1**
(45) Date of publication and mention of the grant of the patent: **14.08.2024**
(21) Application number: 20777798.8
(22) Date of filing: 20.01.2020
(51) Int. Cl.: G01N 35/00, G01N 35/02

(54) **AUTOMATIC ANALYSIS APPARATUS**
AUTOMATISCHE ANALYSEVORRICHTUNG
APPAREIL D'ANALYSE AUTOMATIQUE

(30) Priority: 26.03.2019 JP 2019057947
(43) Date of publication of application: 09.02.2022
(73) Proprietor: Hitachi High-Tech Corporation, Minato-ku Tokyo 105-6409 (JP); F. Hoffmann-La Roche AG, 4070 Basel (CH); Roche Diagnostics GmbH, 68305 Mannheim (DE)
(72) Inventor: HAMASAKI Koshin, Tokyo 105-6409 (JP); TAKADA Eiichiro, Tokyo 105-6409 (JP); MATSUBARA Shigeki, Tokyo 105-6409 (JP); FUKUGAKI Tatsuya, Tokyo 105-6409 (JP); KOBEL Stefan, 82377 Penzberg (DE); KRAUS Ralf, 82377 Penzberg (DE)
(74) Representative: MERH-IP Matias Erny Reichl Hoffmann Patentanwälte PartG mbB
(86) International application number: PCT/JP2020/001655
(87) International publication number: WO 2020/195043

(56) References cited:
- JP-A- 2011 112 502
- JP-A- 2013 178 168
- JP-A- 2013 178 168
- JP-A- 2014 228 318
- JP-A- 2017 015 452
- JP-A- 2017 067 509
- US-A1- 2011 158 848
- US-A1- 2016 305 971

## Description

### Technical Field

The present invention relates to an automatic analyzer.

### Background Art

The automatic analyzer is a device that automatically performs quantitative or qualitative analysis of a specific component included in a specimen such as blood or urine. Various reagents are used for the analysis of a specimen by the automatic analyzer. For example, in analysis using antigen-antibody reactions, in order to improve reaction efficiency, a reagent containing fine particles in a diameter of a few microns, with an antibody attached. With the use of magnetic particles as fine particles, the antigen that is bound to the antibody attached to the magnetic particles can be separated from the antigen that is not bound by B/F separation (Bond/Free separation), i.e., magnetic force.

In order to keep analysis accuracy, it is desired to uniformly disperse fine particles in a reagent, and the reagent is stirred using a puddle, for example, immediately before the reagent is dispensed. The mixture of fine particles attached to the puddle used for stirring into another reagent also has to be prevented. Patent Literature 1 discloses an automatic analyzer in which a reagent containing magnetic particles are stirred using a puddle, the reagent in the state in which the magnetic particles are dispersed due to stirring is dispensed, and the puddle used for stirring is cleaned with water or a cleaning fluid.
Patent literature 2 discloses an automatic analyzer which has a sample dispensing probe washing mechanism.
Patent literature 3 discloses a biological sample measurement device including a measurement section that performs measurement of a biological sample, and a washing section that washes a biological sample contact portion, the biological sample contact portion contacts the biological sample during the measurement.
Patent literature 4 discloses a washing method and an autoanalyzer constituted so as to react to a specimen and to a reagent to analyze the component of the specimen, and equipped with a plurality of washing mechanisms for respectively washing a plurality of different washing targets by washing water at the time of analysis of the specimen.

### Citation List

### Patent Literature

Patent Literature 1: Japanese Unexamined Patent Application Publication No. 2014-228318
Patent Literature 2: US 2011/158848 A1
Patent Literature 3: US 2016/305971 A1
Patent Literature 4: JP 2011 112502 A

### Summary of Invention

### Technical Problem

However, in Patent Literature 1, no consideration is paid to a reduction in a cleaning agent used for cleaning the puddle. The cleaning agent is stocked in a tank included in the automatic analyzer. When the amount of the cleaning agent stocked is increased, the tank has to be increased in size, and this leads to also an increase in the size of the automatic analyzer including the tank.

Therefore, an object of the present invention is to provide an automatic analyzer that is capable of reducing a cleaning agent used for cleaning a puddle stirring a reagent containing fine particles.

### Solution to Problem

In order to achieve the object, the present invention is directed to an automatic analyzer as defined in claim 1. Further aspects of the invention are detailed in the dependent claims. T

### Advantageous Effects of Invention

According to the present invention, an automatic analyzer that is capable of reducing a cleaning agent used for cleaning a puddle stirring a reagent containing fine particles can be provided.

### Brief Description Of The Drawings

FIG. 1 is a plan view showing an exemplary configuration of an automatic analyzer according to the present invention.
FIG. 2 is a schematic cross sectional view showing mechanisms involved in the operations of a reagent dispensing unit, a stirring unit, and a cleaning unit.
FIG. 3A is a schematic cross sectional view showing the puddle of the stirring unit.
FIG. 3B is a schematic cross sectional view showing the puddle of the stirring unit.
FIG. 4 is a diagram showing an exemplary process flow according to a first embodiment.
FIG. 5 is a diagram showing an example of performing a trial calculation of the consumption amount of a cleaning agent according to a first embodiment.
FIG. 6 is a graph showing the transition of the scores the trial calculation result in Fig. 5.
FIG. 7 is a diagram showing an exemplary process flow according to a second embodiment.
FIG. 8 is a diagram showing an example of performing a trial calculation of the consumption amount of a cleaning agent according to a second embodiment.
FIG. 9 is a diagram showing the setting screen of cleaning agent partial replacement according to the second embodiment;
FIG. 10 is a schematic cross sectional view showing components around a cleaning vessel according to a third embodiment.
FIG. 11 is a diagram showing an exemplary process flow according to the third embodiment.

### Description of Embodiments

In the following, preferred embodiments of an automatic analyzer according to the present invention will be described with reference to the drawings. Note that in the following description and the accompanying drawings, components having the same functional configuration are designated with the same reference signs, and redundant description is omitted. The drawings schematically depict an embodiments, and actual objects may be shown in a simplified form.

### First Embodiment

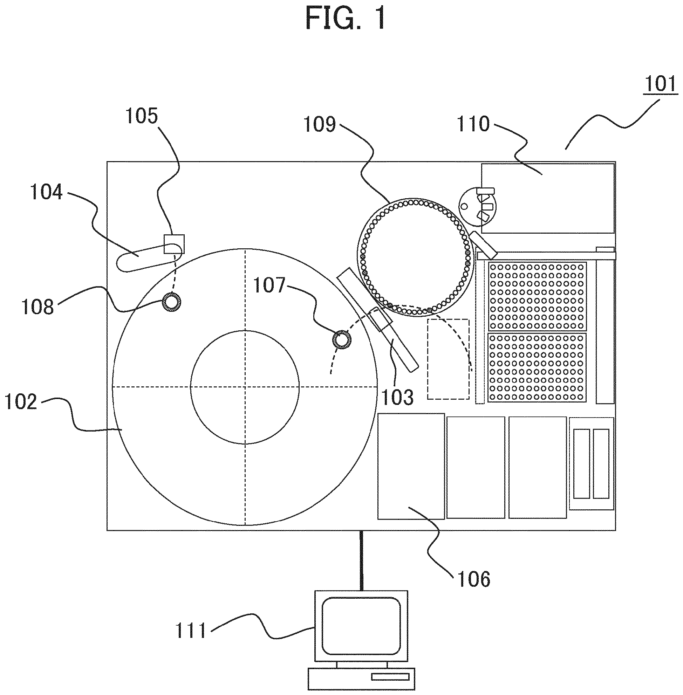

Referring to FIG. 1, an example of the overall structure of an automatic analyzer 101 that automatically performs quantitative or qualitative analysis of a specific component included in a specimen such as blood or urine will be described. The automatic analyzer 101 includes a reagent container storage 102, a reagent dispensing unit 103, a stirring unit 104, a cleaning unit 105, a tank 106, an incubator 109, a detecting unit 110, and a control unit 111. In the following, the components will be described.

The reagent container storage 102 stores a reagent container accommodating a reagent used for analysis at a predetermined temperature, and the reagent container storage 102 rotates to cause the reagent container to move to a predetermined position. The reagent container storage 102 is provided with a dispensing hole 107 and a stirring hole 108. The dispensing hole 107 is a hole used by the reagent dispensing unit 103, and the stirring hole 108 is a hole used by the stirring unit 104.

The reagent dispensing unit 103 dispenses a reagent in a certain amount from the reagent container through the dispensing hole 107, and dispenses the reagent into the incubator 109. Prior to dispensing the reagent by the reagent dispensing unit 103, the stirring unit 104 stirs the reagent in the reagent container through the stirring hole 108 to uniformly disperse fine particles in the reagent. The cleaning unit 105 cleans the stirring unit 104 using a cleaning agent.

The tank 106 stocks the cleaning agent to be supplied to the cleaning unit 105. The incubator 109 adds a specimen into the reagent dispensed by the reagent dispensing unit 103, keeps the reagent at a predetermined temperature, causes a reaction like an antigen-antibody reaction, and then generates a reaction solution. The detecting unit 110 acquires analysis data by application of light to the reaction solution generated in the incubator 109 or by detection of light transmitted through the reaction solution, for example. The control unit 111 controls the operations of the components based on parameters and the like inputted by an operator through a keyboard, a touch panel, and any other device. The control unit 111 includes a display unit that displays inputted parameters, analysis data, and the like, or may include a storage unit for storage.

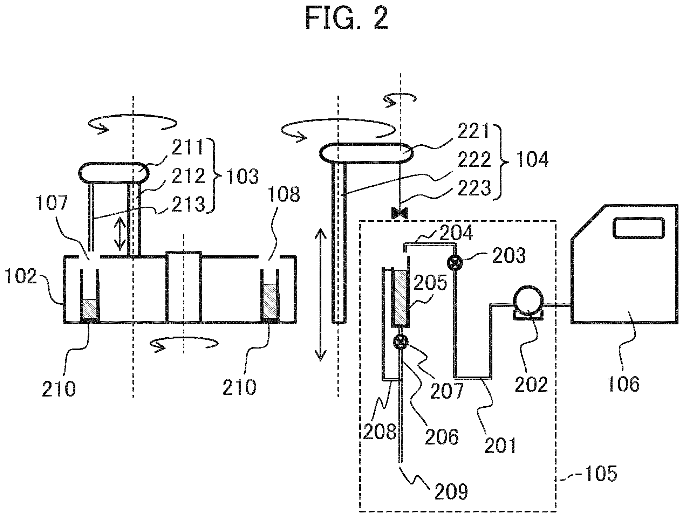

Referring to FIG. 2, the reagent dispensing unit 103, the stirring unit 104, and the cleaning unit 105 will be further described. The reagent dispensing unit 103 has a dispensing arm 211, a dispensing pole 212, and a nozzle 213. The dispensing arm 211 connects the dispensing pole 212 to the nozzle 213, and rotates about the dispensing pole 212 as a rotation axis. The dispensing pole 212 rotationally moves and vertically moves, and thus moves the nozzle 213 connected through the dispensing arm 211 to a predetermined position. The nozzle 213 is inserted into a reagent container 210 disposed directly below the dispensing hole 107 by the rotation of the reagent container storage 102, the nozzle 213 dispenses a reagent accommodated in the reagent container 210 to dispense the reagent into the incubator 109. The nozzle 213 may include a liquid level detection function that detects the liquid level of the reagent in the process of being inserted into the reagent container 210. The nozzle 213 includes the liquid level detection function, and thus the measurement of the remaining amount of the reagent in the reagent container 210 is enabled.

The stirring unit 104 has a stirring arm 221, a stirring pole 222, and a puddle 223. The stirring arm 221 connects the stirring pole 222 to the puddle 223, and rotates about the stirring pole 222 as a rotation axis. The stirring pole 222 rotationally moves and vertically moves/vertical movement, and thus moves the puddle 223 connected through the stirring arm 221 to a predetermined position. The puddle 223 has a shaft part in a bar shape and a propeller part provided at the tip end of the shaft part. The propeller part has a vane shape or a blade shape with its outer diameter larger than the shaft part. The puddle 223 is inserted into the reagent container 210 disposed directly below the stirring hole 108 by the rotation of the reagent container storage 102, and rotates the propeller part about the shaft part as a rotation axis for stirring the reagent. Similarly to the nozzle 213, the puddle 223 may include a liquid level detection function. The puddle 223 includes the liquid level detection function, and thus the measurement of the remaining amount of the reagent in the reagent container 210 is enabled.

The cleaning unit 105 includes a supply passage 201, a pump 202, a supply valve 203, a discharge port 204, a cleaning vessel 205, a lower passage 206, an exhaust valve 207, an upper passage 208, and a drain 209. The supply passage 201 is a passage that connects the tank 106 up to the discharge port 204. The pump 202 is provided in the midway point of the supply passage 201, and delivers the cleaning agent stocked in the tank 106 toward the discharge port 204. The supply valve 203 is a valve that is provided between the pump 202 and the discharge port 204 and that opens and closes the supply passage 201. The discharge port 204 discharges the cleaning agent delivered from the tank 106 into the cleaning vessel 205. Note that in order to prevent a backflow of the cleaning agent from the cleaning vessel 205 to the discharge port 204, preferably, the discharge port 204 is provided on the upper part of the cleaning vessel 205. The cleaning vessel 205 reserves the cleaning agent used for cleaning the puddle 223 of the stirring unit 104. The lower passage 206 is a passage that connects the lower part of the cleaning vessel 205 to the drain 209, and used for exhausting the cleaning agent reserved in the cleaning vessel 205. The exhaust valve 207 is provided in the midway point of the lower passage 206, and is a valve that opens and closes the lower passage 206. The exhaust valve 207 is closed when the puddle 223 is cleaned, and is opened when the cleaning agent is exhausted. The upper passage 208 is a passage that exhausts an excess cleaning agent to the drain 209 when the cleaning agent reserved in the cleaning vessel 205 is overflowed. The drain 209 is an exhaust hole for the cleaning agent.

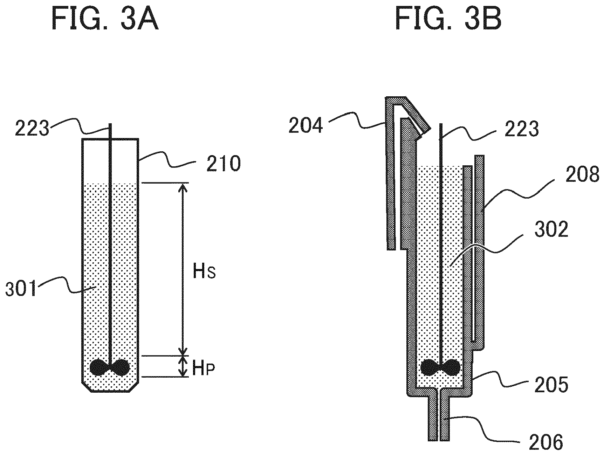

Referring to FIG. 3, the puddle 223 of the stirring unit 104 will be further described. FIG. 3(a) is a view showing the puddle 223 immersed in the reagent 301 for stirring the reagent 301 accommodated in the reagent container 210. In stirring the reagent 301, in order to disperse fine particles sunk on the bottom of the reagent container 210, the puddle 223 is immersed in the reagent 301 such that the propeller part is disposed at a predetermined height from the bottom of the reagent container 210, at a height of a few millimeters, for example. The amount of the reagent 301 attached to the puddle 223 immersed in the reagent 301 is almost proportional to the surface area of the puddle 223. Since the outer diameter of the propeller part is larger than the shaft part, the surface area per unit length in the rotation axis direction is large. That is, the amount of the reagent 301 attached per unit length is larger in the propeller part than in the shaft part.

Therefore, as shown in FIG. 3(a), the length of the puddle 223 to be immersed in the reagent 301 is separated into a length Hp of the propeller part and a length Hs of the shaft part. It is assumed that in the propeller part, the surface area per unit length in the rotation axis direction is α times the shaft part, the amount of the reagent 301 attached to the puddle 223 is proportional to Hs + α•Hp at one stirring, and Hs + α•Hp is a score of the amount attached per stirring. Note that the remaining amount of the reagent 301 is changed due to dispensing after stirring. Although Hp is constant to a change in the remaining amount, Hs is changed, and thus the score of the amount attached is also changed at every stirring.

FIG. 3(b) is a view showing the puddle 223 immersed in the cleaning agent 302 for cleaning with the cleaning agent 302 reserved in the cleaning vessel 205. The amount of the cleaning agent 302 to be supplied from the discharge port 204 to the cleaning vessel 205 is the amount in which the range of the reagent 301 attached, which is the length of Hs + Hp from the tip end of the puddle 223, is sufficiently immersed.

Cleaning the puddle 223 by the cleaning agent 302 moves the reagent 301 attached to the puddle 223 to the cleaning agent 302, and the reagent 301 is mixed. Since the amount of the reagent 301 to be mixed in the cleaning agent 302 is proportional to the score, Hs + α•Hp, of the amount attached per stirring, Hs + α•Hp can be considered to be the score of the amount of mixed per cleaning.

In the case in which the cleaning agent 302 is reused, the reagent 301 newly attached to the puddle 223 is further mixed into the cleaning agent 302 to be reused and accumulated. Therefore, as a score M of the accumulated amount of the reagent 301 contained in the cleaning agent 302, Σ(Hs + α·Hp) is used. Since the score M corresponds to the degree of contamination of the cleaning agent 302, whether to reuse the cleaning agent 302 is reused is determined based on the size of the score M, and thus a reduction in the used amount of the cleaning agent 302 is enabled, while the degree of contamination is maintained at a certain degree or less.

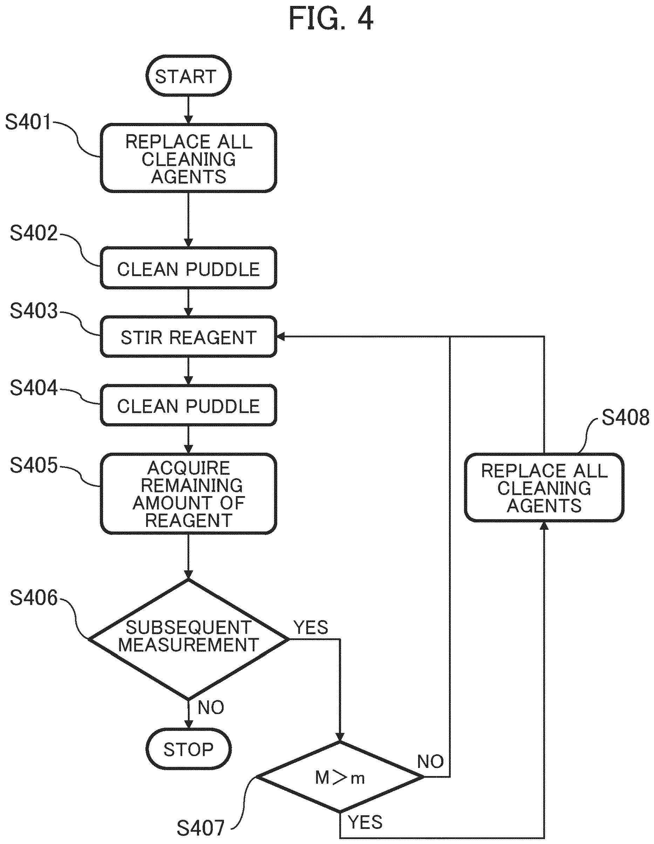

Referring to FIG. 4, an exemplary process flow performed in the present embodiment will be described.

### (S401)

The cleaning agent 302 reserved in the cleaning vessel 205 is totally replaced. Specifically, first, the exhaust valve 207 is opened, and the cleaning agent 302 reserved in the cleaning vessel 205 is exhausted. Subsequently, the exhaust valve 207 is closed, the supply valve 203 is opened, and the pump 202 supplies the cleaning agent 302 to be delivered from the tank 106 to the cleaning vessel 205.

### (S402)

The puddle 223 is cleaned by the cleaning agent 302. Specifically, first, the stirring pole 222 vertically moves and rotationally moves, and the puddle 223 is immersed in the cleaning agent 302 reserved in the cleaning vessel 205. Subsequently, the puddle 223 is rotated in the cleaning agent 302, and the puddle 223 is cleaned.

### (S403)

The reagent 301 accommodated in the reagent container 210 is stirred by the puddle 223. Specifically, first, the stirring pole 222 vertically moves and rotationally moves, and the puddle 223 is immersed in the reagent 301 accommodated in the reagent container 210. Subsequently, the puddle 223 is rotated in the reagent 301 to stir the reagent 301, and fine particles contained in the reagent 301 are dispersed.

### (S404)

The puddle 223 is cleaned by the cleaning agent 302. The specific operation is the same as S402.

### (S405)

The remaining amount of the reagent 301 in the reagent container 210 is acquired. The remaining amount of the reagent 301 is measured by the liquid level detection function included in the nozzle 213 or the puddle 223. In the case in which the remaining amount is measured by the nozzle 213, preferably, the remaining amount is measured before the reagent 301 is dispensed by the nozzle 213. In the case in which the remaining amount is measured by the puddle 223, the remaining amount may be measured simultaneously in the process in S403. Furthermore, the control unit 111 may assume the remaining amount of the reagent 301 based on a predetermined analysis plan.

### (S406)

The control unit 111 determines whether a subsequent measurement is present. In the case in which the subsequent measurement is present, the process goes to S407, whereas in the case in which no subsequent measurement is present, the process flow is ended. Note that a series of processes from S403 to S405 is measurement in one time.

### (S407)

The control unit 111 computes the score M, and determines whether the score M exceeds a threshold m. In the case in which the score M exceeds the threshold m, the process goes to S408, whereas in the case in which the score M does not exceed the threshold m, the process returns to S403. The threshold m is preset corresponding to the acceptable degree of contamination.

Note that for computing the score M, the remaining amount of the reagent 301 measured in S405 is used. Since the puddle 223 is immersed in the reagent 301 such that the propeller part is disposed at a predetermined height from the bottom of the reagent container 210, the length Hs of the shaft part to be immersed in the reagent 301 is determined from the remaining amount of the reagent 301. The length Hp of the propeller part to be immersed in the reagent 301 is constant, the ratio α of the surface area per unit length of the propeller part to the shaft part is determined in advance from the dimensional shape of the puddle 223, and thus Hs + α•Hp is determined from Hs, α, and Hp. In the case in which the cleaning agent 302 is reused, Hs + α•Hp, which is the score of the amount of the reagent 301 mixed per cleaning, is accumulated for each cleaning, and the score M = Σ(Hs + α•Hp) is determined.

### (S408)

The cleaning agent 302 reserved in the cleaning vessel 205 is totally replaced. The specific operation is the same as S401. Note that the score M is reset in association with the total replacement of the cleaning agent 302. After this step, the process returns to S403.

As described above, according to the described process flow, the reuse of the cleaning agent 302 is enabled while the acceptable degree of contamination is maintained. Thus a reduction in the cleaning agent 302 stocked in the tank 106 is enabled, and this enables a reduction in size of the tank 106.

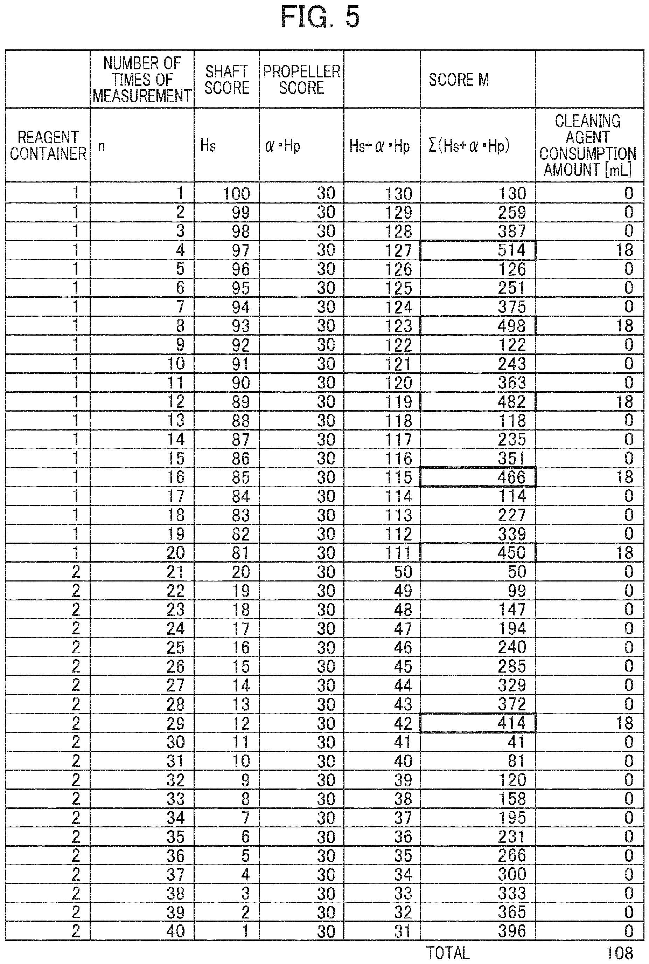

Referring to FIG. 5, an example of trial calculation of the consumption amount of the cleaning agent 302 in the present embodiment will be described. In FIG. 5, the maximum value of Hs was 100, and the value of Hs was decreased by one at one measurement. The maximum amount of the reagent 301, Hs = 100, is accommodated in a reagent container 1 used in the number of times of measurement 1 to 20, and a small amount of the reagent 301, Hs = 20, is accommodated in a reagent container 2 used in the number of times of measurement 21 to 40. Since the propeller part is immersed in the reagent 301 all the time, α•Hp was a fixed value of 30. In the cleaning vessel 20, 18 mL of the cleaning agent 302 is reserved, and the threshold m is 400. Note that values such as Hs and α•Hp in FIG. 5 are examples for trial calculation, and in the actual automatic analyzer 101, values corresponding to the size of the reagent container 210, the resolution of the liquid level detection function, and any other parameters are given.

Under the above conditions, when Hs + α•Hp for each of the number of times of measurement n is computed, 100 + 30 = 130 in n = 1, and 99 + 30 = 129 in n = 2. From the values of Hs + α•Hp in n = 1 and n = 2, the score M in n = 2 is 130 + 129 = 259. After that, the score M is accumulated as n is increased. For example, M = 514 in n = 4, and M > m (= 400), and thus the cleaning agent 302 is totally replaced. That is, a new cleaning agent 302 in 18 mL is consumed, and in the subsequent measurement, the score M is reset. Note that the score M exceeding the threshold m was shown in thick characters.

In FIG. 5, in the number of times of measurement 1 to 20, the cleaning agent 302 is totally replaced once per four measurements, and the consumption amount of the cleaning agent 302 is in 18 × 20/4 = 90 mL. In the number of times of measurement 21 to 40, the total replacement of the cleaning agent 302 is only one time. Thus, the total of the consumption amount in the number of times of measurement 1 to 40 is 108 mL, which is just 150 of the consumption amount 720 mL in the case in which the total replacement is performed at each measurement.

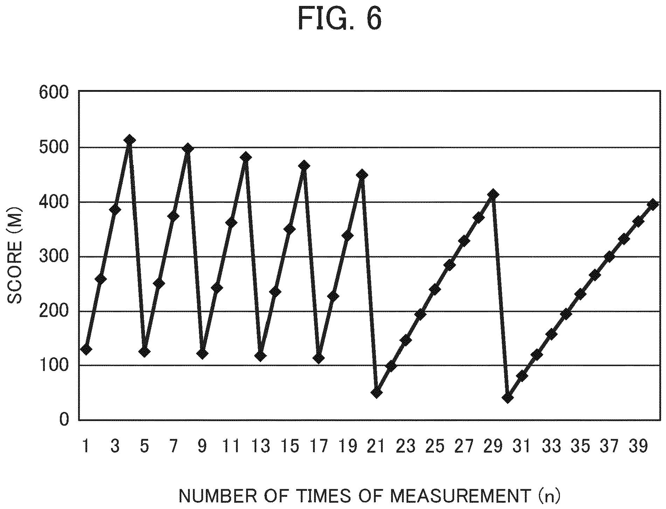

FIG. 6 shows the transition of the score M in the number of times of measurement 1 to 40 of trial calculation results in FIG. 5. Decreasing the number of times of the total replacement of the cleaning agent 302 increases the amount of the reagent 301 contained in the cleaning agent 302, and this may adversely affect the subsequent. Thus, the threshold m has to be set to an appropriate value based on the experiments, for example. In FIG. 6, when the threshold m = 400 is exceeded like 514, the maximum value of the score M, the score M is reset, and the cleaning agent 302 is totally replaced. Thus, the amount of the reagent 301 contained in the cleaning agent 302 used for cleaning the puddle 223 is suppressed to below score 400.

As an example similar to FIG. 5, in the case in which the degree of contamination is low per cleaning, the maximum value of the score M can be set high. For example, in the case in which the surface treatment of the puddle 223 reduces the amount of the reagent 301 attached, or in the case in which the capacity of the cleaning vessel 205 is large, the degree of contamination due to the entry of the reagent 301 tends to be low. In such a case, the frequency of replacement necessary for the cleaning agent 302 may be reduced to every few days to every few weeks. In the case in which the frequency of replacement of the cleaning agent 302 is low, the convenience is not so impaired even though the exhaust valve 207 is a valve that is manually opened and closed. Alternatively, a scheme may be selected in which the exhaust valve 207 and the passage connecting the exhaust valve 207 to the drain 209 are eliminated and contaminated liquid is directly removed from the cleaning vessel 205 using a syringe, for example. This scheme enables the simplification of the structure in the periphery of the cleaning vessel. In the case in which the manual replacement scheme for the cleaning agent 302 is mounted, a function that displays a notification (alarm) of recommending the total replacement of the cleaning agent 302 or cleaning the cleaning vessel 205 on a screen when the score M exceeds the threshold m is provided, and this urges the operator to replace the cleaning agent 302.

### Second Embodiment

In the first embodiment, the description is made that in the case in which the cleaning agent 302 is not totally replaced, the cleaning agent 302 is reused as it is. When the cleaning agent 302 is reused as it is, the amount of the reagent 301 contained in the cleaning agent 302 is increased. Consequently, in the case in which the threshold m set corresponding to the acceptable degree of contamination is small, the cleaning agent 302 is frequently totally replaced, and the consumption amount of the cleaning agent 302 may fail to decrease. Therefore, in the present embodiment, in the case in which the cleaning agent 302 is not totally replaced, the cleaning agent 302 is not reused as it is, and the cleaning agent 302 is partially replaced for reuse, which will be described. Note that the difference between the present embodiment and the first embodiment is that a new step is added to the process flow.

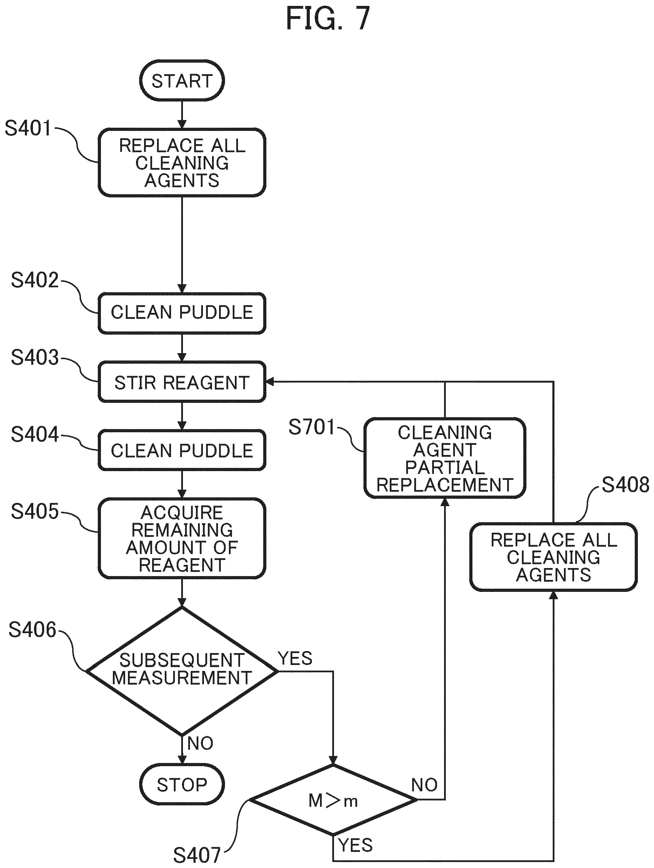

Referring to FIG. 7, an exemplary process flow performed in the present embodiment will be described. Note that S401 to S406 and S408 are the same as steps in the first embodiment, and the description is omitted.

### (S407)

The control unit 111 computes the score M, and determines whether the score M exceeds the threshold m. In the case in which the threshold m is exceeded, the process goes to S408, whereas in the case in which the threshold m is not exceeded, the process goes to S701. The threshold m is preset based on the acceptable degree of contamination.

### (S701)

The cleaning agent 302 reserved in the cleaning vessel 205 is partially replaced. Specifically, first, the exhaust valve 207 is opened, and a part of the cleaning agent 302 reserved in the cleaning vessel 205, three milliliters in 18 mL, for example, is exhausted. Subsequently, the exhaust valve 207 is closed, the supply valve 203 is opened, and the exhausted amount, three milliliters of the cleaning agent 302, for example, is supplied from the tank 106 to the cleaning vessel 205. After this step, the process returns to S403.

The partial replacement of the cleaning agent 302 reduces the amount of the reagent 301 contained in the cleaning agent 302, compared with the case in which the cleaning agent 302 is reused as it is. Even in the case in which the threshold m is small, a reduction in the number of times of the total replacement of the cleaning agent 302 is enabled.

As described above, according to the described process flow, almost all the cleaning agent 302 can be reused while the acceptable degree of contamination is maintained. Thus, a reduction in the cleaning agent 302 stocked in the tank 106 is enabled, and this enables a reduction in size of the tank 106.

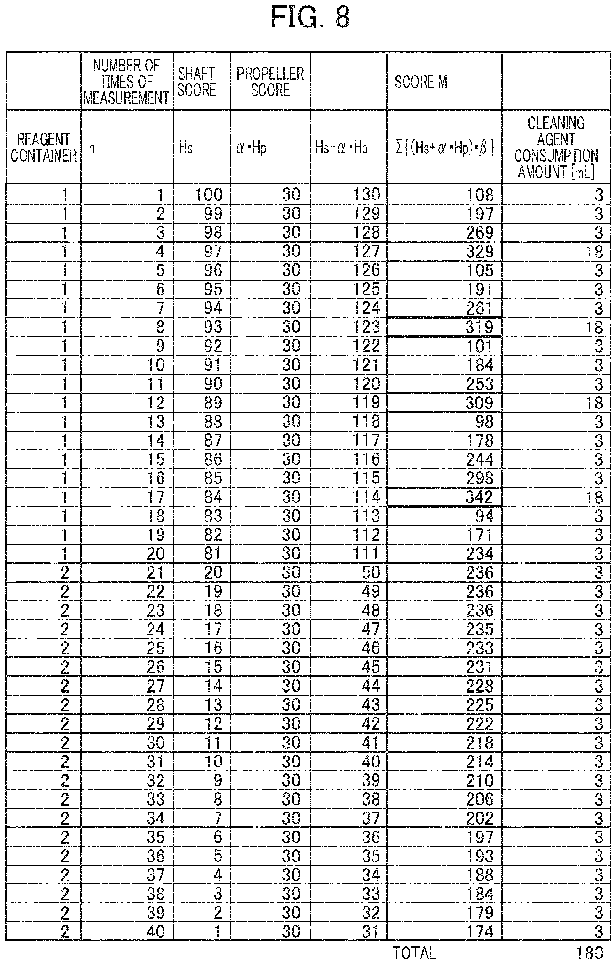

Referring to FIG. 8, an example of trial calculation of the consumption amount of the cleaning agent 302 in the present embodiment will be described. In FIG. 8, Hs and α•Hp are set similarly to the first embodiment, and a reuse ratio β of the cleaning agent 302 is 1 - 3/18 ≈ 0.83, and the threshold m is 300.

Under the above conditions, when Hs + α•Hp in n = 1 is computed, Hs + α•Hp is 130 similarly to the first embodiment. This value is multiplied by β = 0.83, and then the score M is 108. Hs + α•Hp in n = 2 is 129, the value 108 of the score M in n = 1 is added to this value, and then the score M is 237. Furthermore, β = 0.83 is multiplied, and then the score M is 197. After that, the score M is accumulated as n is increased. In the case in which the threshold m = 300 is exceeded, the cleaning agent 302 is totally replaced, and the score M is reset in the subsequent measurement.

In FIG. 8, in the number of times of measurement 1 to 20, fur times of total replacement and 16 times of partial replacement are performed, and the consumption amount of the cleaning agent 302 is 120 mL. In the number of times of measurement 21 to 40, no total replacement is performed, 20 times of partial replacement alone are performed, and the consumption amount of the cleaning agent 302 is 60 mL. Accordingly, the total of the consumption amount in the number of times of measurement 1 to 40 is 180 mL, which is just 250 of the consumption amount 720 mL in the case in which the total replacement is performed at each measurement, and a reduction in the maximum value of the score M is enabled, compared with the first embodiment.

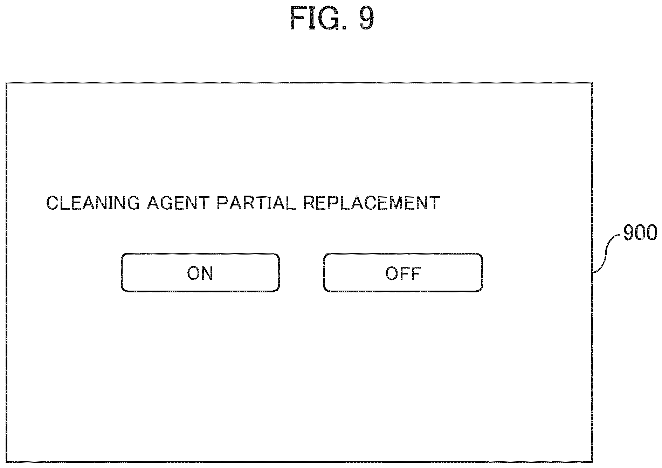

Note that whether to perform the partial replacement of the cleaning agent 302 may be switched by a setting screen 900, for example, as shown in FIG. 9. In the case in which the acceptable degree of contamination of the cleaning agent 302 is high, an OFF button is pressed down on the setting screen 900, and thus a reduction in the consumption amount of the cleaning agent 302 is enabled. In the case in which the acceptable degree of contamination is low, an ON button is pressed down on the setting screen 900. Thus, the amount of the reagent 301 contained in the cleaning agent 302 is suppressed, and improvement in analysis accuracy is enabled.

### Third Embodiment

In the first embodiment, a part of the reagent 301 contained in the cleaning agent 302 to be reused is sometimes again attached to the puddle 223. In the case in which fine particles contained in the reagent 301 are magnetic substances, the use of the magnetic field enables the suppression of reattachment of magnetic particles contained in the cleaning agent 302 to the puddle 223. Therefore, in the present embodiment, the description will be made that a magnetic field is generated toward the cleaning vessel 205 and the reattachment of the magnetic particles to the puddle 223 is suppressed. Note that the difference between the present embodiment and the first embodiment is that the configuration in the vicinity of the cleaning vessel 205 is different and a new step is added to the process flow.

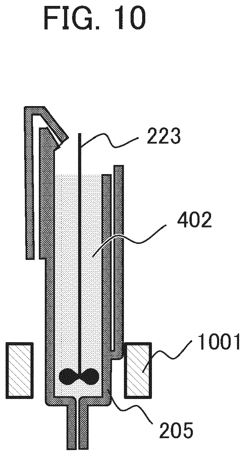

Referring to FIG. 10, the configuration in the vicinity of the cleaning vessel 205 of the present embodiment will be described. On the outer circumference of the cleaning vessel 205, a magnetic field generating unit 1001 is provided. The magnetic field generating unit 1001 includes an electromagnet or a permanent magnet, and generates a magnetic field toward the cleaning vessel 205 in response to an instruction from the control unit 111. The magnetic field generated by the magnetic field generating unit 1001 traps magnetic particles contained in the cleaning agent 302 reserved in the cleaning vessel 205 near the inner wall of the cleaning vessel 205. As the magnetic particle, there are fine particles having a diameter of 2.8 microns made by Dynal Biotech Ltd., for example.

In order to trap the magnetic particles precipitating in the cleaning agent 302, preferably, the magnetic field generating unit 1001 is disposed in the lower part of the cleaning vessel 205. In the case in which the outer diameter of the cleaning vessel 205 is a few centimeters, preferably, magnetic force generated by the magnetic field generating unit 1001 is 0.1 to 1.0 T. Note that in order to suppress the influence on other devices in the automatic analyzer 101, a magnetic shield may be provided on the outer circumference of the magnetic field generating unit 1001.

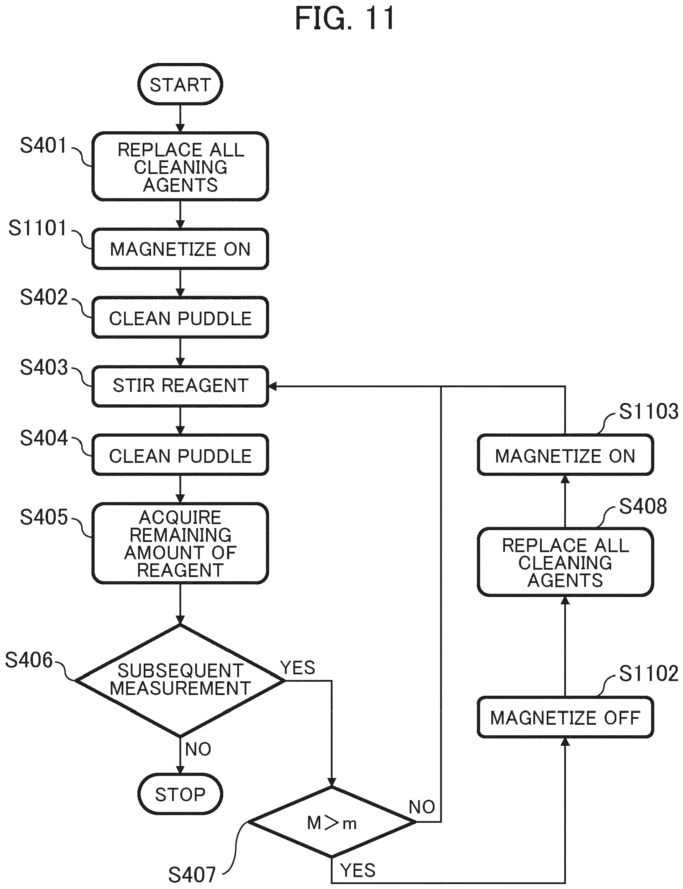

Referring to FIG. 11, an exemplary process flow performed in the present embodiment will be described. Note that S401 to S408 are the same as the first embodiment, and the description is omitted.

### (S1101)

The magnetic field generating unit 1001 generates a magnetic field toward the cleaning vessel 205. Prior to cleaning the puddle 223 in S402, the magnetic field is generated in the inside of the cleaning vessel 205, the magnetic particles contained in the cleaning agent 302 are trapped near the inner wall of the cleaning vessel 205, and this enables the suppression of the reattachment of the magnetic particles to the puddle 223. Thus, improvement in the cleaning effect is enabled.

### (S1102)

The magnetic field generating unit 1001 stops the generation of the magnetic field. Prior to the total replacement of the cleaning agent 302 in S408, the generation of the magnetic field is stopped. Thus, this enables the exhaust of the magnetic particles together with the cleaning agent 302.

### (S1103)

The magnetic field generating unit 1001 starts the generation of the magnetic field. Prior to cleaning the puddle 223 in S404, the generation of the magnetic field is started, improvement in the cleaning effect is enabled similarly to the process in S1101.

As described above, according to the described process flow, the reuse of the cleaning agent 302 is enabled while the acceptable degree of contamination is maintained. Thus a reduction in the cleaning agent 302 stocked in the tank 106 is enabled, and this enables a reduction in size of the tank 106. In the present embodiment, the cleaning effect is improved more than in the first embodiment, and thus, highly accurate analysis is enabled.

Note that in cleaning the puddle 223 in in S402 or S404, the magnetic field generating unit 1001 may be controlled to strengthen magnetic force. The magnetic force is strengthened in the process of cleaning the puddle 223, and this enables further improvement of the cleaning effect. When the magnetic field generating unit 1001 is an electromagnet, magnetic force is controlled by adjusting the electric current to be supplied, whereas when the magnetic field generating unit 1001 is a permanent magnet, magnetic force is controlled by adjusting the distance to the cleaning vessel 205. The magnetic force may be controlled by insertion or extraction of the magnetic shield between the magnetic field generating unit 1001 and the cleaning vessel 205.

As described above, a plurality of embodiments according to the present invention is described. The present invention is not limited to the foregoing embodiments, and the component may be modified in the scope not deviating from the gist of the invention. A plurality of components disclosed in the foregoing embodiments may be appropriately combined. For example, in the combination of the second embodiment and the third embodiment, S1102 may be added before S408 and S701, and S1103 may be added after S408 and S701. Furthermore, some components may be removed from the entire components shown in the foregoing embodiment.

### List of Reference Signs

- 101:: automatic analyzer
- 102:: reagent container storage
- 103:: reagent dispensing unit
- 104:: stirring unit
- 105:: cleaning unit
- 106:: tank
- 107:: dispensing hole
- 108:: stirring hole
- 109:: incubator
- 110:: detecting unit
- 111:: control unit
- 201:: supply passage
- 202:: pump
- 203:: supply valve
- 204:: discharge port
- 205:: cleaning vessel
- 206:: lower passage
- 207:: exhaust valve
- 208:: upper passage
- 209:: drain
- 210:: reagent container
- 211:: dispensing arm
- 212:: dispensing pole
- 213:: nozzle
- 221:: stirring arm
- 222:: stirring pole
- 223:: puddle
- 301:: reagent
- 302:: cleaning agent
- 900:: setting screen
- 1001:: magnetic field generating unit

## Claims

1. An automatic analyzer comprising:
a reagent container configured to accommodate a reagent (301) including a fine particle;
a puddle (223) configured to stir the reagent; and
a cleaning unit (105) configured to immerse the puddle (223) in a cleaning vessel (205) reserving a cleaning agent (302) for cleaning,
**characterized in that**:
the automatic analyzer (101) further includes a determining unit configured to determine whether to totally replace the cleaning agent (302) based on a score computed using a number of times of cleaning the puddle (223), having stirred the reagent (301), in the cleaning unit (105) and a remaining amount of the reagent (301), wherein either the puddle (223) or a nozzle (213) of a reagent dispensing unit (103) of the automatic analyzer includes a liquid level detection function which is configured to measure the remaining amount of the reagent, and
when the determining unit determines that the cleaning agent (105) is to be totally replaced, the cleaning unit (105) displays, on a screen, a notification of total replacement of the cleaning agent (302), or a notification of recommending the total replacement of the cleaning agent.

2. The automatic analyzer (101) according to claim 1,
wherein when the determining unit determines that the cleaning agent (302) is not totally replaced, the cleaning unit (105) reuses the cleaning agent (302).

3. The automatic analyzer (101) according to claim 1,
wherein when the determining unit determines that the cleaning agent (302) is not totally replaced, the cleaning unit (105) partially replaces the cleaning agent (302).

4. The automatic analyzer (101) according to claim 3,
wherein the determining unit determines whether to reuse the cleaning agent (302) based on the computed score.

5. The automatic analyzer (101) according to claim 1,
wherein when the cleaning unit (105) does not totally replace the cleaning agent (302), a screen that sets whether the cleaning agent (302) is partially replaced is displayed.

6. The automatic analyzer (101) according to claim 1,
wherein: a fine particle included in the reagent is a magnetic substance; and
the cleaning unit (105) has a magnetic field generating unit configured to generate a magnetic field toward the cleaning vessel (205).

7. The automatic analyzer (101) according to claim 6,
wherein the magnetic field generating unit (1001) halts generation of a magnetic field prior to total replacement of the cleaning agent (302), and starts generation of a magnetic field after the total replacement of the cleaning agent (302).

8. The automatic analyzer (101) according to claim 6,
wherein the magnetic field generating unit (1001) controls magnetic force based on whether the cleaning unit (105) is cleaning.

## Patentansprüche

1. Automatischer Analysator, umfassend:
einen Reagenzbehälter, der konfiguriert ist, um ein Reagenz (301) aufzunehmen, dass ein feines Teilchen enthält;
ein Paddel (223), das konfiguriert ist, um das Reagenz zu rühren; und
eine Reinigungseinheit (105), die konfiguriert ist, um das Paddel (223) in ein Reinigungsgefäß (205) einzutauchen, dass ein Reinigungsmittel (302) zum Reinigen vorhält,
**dadurch gekennzeichnet, dass**:
der automatische Analysator (101) ferner eine Bestimmungseinheit enthält, die konfiguriert ist, um zu bestimmen, ob das Reinigungsmittel (302) vollständig ersetzt werden soll, basierend auf einer Bewertung, die unter Verwendung einer Anzahl von Malen des Reinigens des Paddels (223), das das Reagenz (301) gerührt hat, in der Reinigungseinheit (105) und einer verbleibenden Menge des Reagenzes (301) berechnet wird, wobei entweder das Paddel (223) oder eine Düse (213) einer Reagenzabgabeeinheit (103) des automatischen Analysators eine Flüssigkeitspegelerfassungsfunktion enthält, die konfiguriert ist, um die verbleibende Menge des Reagenzes zu messen, und
wenn die Bestimmungseinheit bestimmt, dass das Reinigungsmittel (105) vollständig ersetzt werden soll, die Reinigungseinheit (105) auf einem Bildschirm eine Benachrichtigung des vollständigen Ersetzens des Reinigungsmittels (302) oder eine Benachrichtigung des Empfehlens des vollständigen Ersetzens des Reinigungsmittels anzeigt.

2. Automatischer Analysator (101) nach Anspruch 1,
wobei, wenn die Bestimmungseinheit bestimmt, dass das Reinigungsmittel (302) nicht vollständig ersetzt wird, die Reinigungseinheit (105) das Reinigungsmittel (302) wiederverwendet.

3. Automatischer Analysator (101) nach Anspruch 1,
wobei, wenn die Bestimmungseinheit bestimmt, dass das Reinigungsmittel (302) nicht vollständig ersetzt wird, die Reinigungseinheit (105) das Reinigungsmittel (302) teilweise ersetzt.

4. Automatischer Analysator (101) nach Anspruch 3,
wobei die Bestimmungseinheit basierend auf der berechneten Bewertung bestimmt, ob das Reinigungsmittel (302) wiederverwendet werden soll.

5. Automatischer Analysator (101) nach Anspruch 1,
wobei, wenn die Reinigungseinheit (105) das Reinigungsmittel (302) nicht vollständig ersetzt, ein Bildschirm angezeigt wird, der einstellt, ob das Reinigungsmittel (302) teilweise ersetzt wird.

6. Automatischer Analysator (101) nach Anspruch 1,
wobei: ein feines Teilchen, das in dem Reagenz enthalten ist, eine magnetische Substanz ist; und
die Reinigungseinheit (105) eine Magnetfelderzeugungseinheit aufweist, die konfiguriert ist, um ein Magnetfeld in Richtung des Reinigungsgefäßes (205) zu erzeugen.

7. Automatischer Analysator (101) nach Anspruch 6,
wobei die Magnetfelderzeugungseinheit (1001) die Erzeugung eines Magnetfelds vor dem vollständigen Ersetzen des Reinigungsmittels (302) stoppt und die Erzeugung eines Magnetfelds nach dem vollständigen Ersetzen des Reinigungsmittels (302) startet.

8. Automatischer Analysator (101) nach Anspruch 6,
wobei die Magnetfelderzeugungseinheit (1001) die Magnetkraft basierend darauf steuert, ob die Reinigungseinheit (105) reinigt.

## Revendications

1. Analyseur automatique comprenant:
un récipient de réactif configuré pour loger un réactif (301) comprenant une particule fine ;
une spatule (223) configurée pour agiter le réactif ; et
une unité de nettoyage (105) configurée pour immerger la spatule (223) dans un récipient de nettoyage (205) réservant un agent de nettoyage (302) pour le nettoyage,
**caractérisé en ce que**:
l'analyseur automatique (101) comprend en outre une unité de détermination configurée pour déterminer s'il faut remplacer totalement l'agent de nettoyage (302) sur la base d'un score calculé en utilisant un nombre de fois de nettoyage de la spatule (223), ayant agité le réactif (301), dans l'unité de nettoyage (105) et une quantité restante du réactif (301), dans lequel la spatule (223) ou une buse (213) d'une unité de distribution de réactif (103) de l'analyseur automatique comprend une fonction de détection de niveau de liquide qui est configurée pour mesurer la quantité restante du réactif, et
lorsque l'unité de détermination détermine que l'agent de nettoyage (105) doit être remplacé totalement, l'unité de nettoyage (105) affiche, sur un écran, une notification de remplacement total de l'agent de nettoyage (302), ou une notification de recommandation du remplacement total de l'agent de nettoyage.

2. Analyseur automatique (101) selon la revendication 1,
dans lequel lorsque l'unité de détermination détermine que l'agent de nettoyage (302) n'est pas remplacé totalement, l'unité de nettoyage (105) réutilise l'agent de nettoyage (302) .

3. Analyseur automatique (101) selon la revendication 1,
dans lequel lorsque l'unité de détermination détermine que l'agent de nettoyage (302) n'est pas remplacé totalement, l'unité de nettoyage (105) remplace partiellement l'agent de nettoyage (302).

4. Analyseur automatique (101) selon la revendication 3,
dans lequel l'unité de détermination détermine s'il faut réutiliser l'agent de nettoyage (302) sur la base du score calculé.

5. Analyseur automatique (101) selon la revendication 1,
dans lequel lorsque l'unité de nettoyage (105) ne remplace pas totalement l'agent de nettoyage (302), un écran qui définit si l'agent de nettoyage (302) est remplacé partiellement est affiché.

6. Analyseur automatique (101) selon la revendication 1,
dans lequel: une particule fine incluse dans le réactif est une substance magnétique ; et
l'unité de nettoyage (105) a une unité de génération de champ magnétique configurée pour générer un champ magnétique vers le récipient de nettoyage (205).

7. Analyseur automatique (101) selon la revendication 6,
dans lequel l'unité de génération de champ magnétique (1001) arrête la génération d'un champ magnétique avant le remplacement total de l'agent de nettoyage (302), et commence la génération d'un champ magnétique après le remplacement total de l'agent de nettoyage (302).

8. Analyseur automatique (101) selon la revendication 6,
dans lequel l'unité de génération de champ magnétique (1001) commande la force magnétique selon que l'unité de nettoyage (105) nettoie.
